# EUROPEAN PATENT SPECIFICATION

(11) **EP 0 945 162 B1**
(45) Date of publication and mention of the grant of the patent: **24.05.2006**
(21) Application number: 99105774.6
(22) Date of filing: 22.03.1999
(51) Int. Cl.: B01D 53/14

(54) **Process for the removal of carbon dioxide present in gases**
Verfahren zur Entfernung von Kohlendioxid aus Gasen
Procédé de séparation de dioxyde de carbone de gaz

(30) Priority: 23.03.1998 JP 7365898
(43) Date of publication of application: 29.09.1999
(73) Proprietor: MITSUBISHI HEAVY INDUSTRIES, LTD., Tokyo 100-0005 (JP)
(72) Inventor: Iijima, Masaki, c/o Mitsubishi Heavy Ind., Ltd, Chiyoda-ku, Tokyo (JP); Mitsuoka, Shigeaki, c/o Hiroshima R. & D. Center, Nishi-ku, Hiroshima-shi, Hiroshima-ken (JP); Tanaka, Hiroshi, c/o Hiroshima R. & D. Center, Nishi-ku, Hiroshima-shi, Hiroshima-ken (JP)
(74) Representative: Behrens, Dieter

(56) References cited:
- EP-A- 0 558 019
- EP-A- 0 705 637
- GB-A- 2 167 397
- US-A- 4 406 868

## Description

### FIELD OF THE INVENTION AND RELATED ART STATEMENT

This invention relates to a process for the removal of carbon dioxide (CO₂) present in carbon dioxide-containing gases, and an apparatus therefore. The removal of carbon dioxide is effected by gas-liquid contact between the gas and an aqueous absorbent solution usually in an absorption tower.

Investigations have been made on the removal and recovery of CO₂ having a partial pressure in the range of about 0.3 to 50 atmospheres (atm., kg/cm²), from various industrial gases such as natural gas and synthesis gases, and a variety of processes therefore have been proposed.

For example, in a process for reacting and absorbing carbon dioxide by gas-liquid contact under atmospheric and with a partial pressure of CO₂ of 0.2 atm (absolute pressure), an aqueous absorbent solution of N-methyldiethanolamine (MDEA) with or without an absorption accelerator (e.g., piperazine) has been used. Other absorbents in the form of secondary hindered amines used as essential components e.g. IPAMP, MEA, AMP, with or without an absorption accelerator have also been used under atmospheric pressure (EP 0 705 637 A1) but also (EP 0 558 019 A2).

However, the above-described process for the removal of CO₂ by using an aqueous solution of MDEA has the disadvantage that, when the aqueous solution is used in the usual partial pressure range, the released CO₂ level is not sufficient to achieve a very efficient removal of carbon dioxide.

More specifically, in order to remove carbon dioxide from an object gas to be treated, for example, by gas-liquid contact, it is desirable that, with respect to an aqueous solution containing an absorbent (i.e., an absorbing fluid), the difference between the saturated CO₂ level under the conditions of the absorption region and the saturated CO₂ level under the conditions of the regeneration region is as great as possible. However, the aforesaid conventional absorbing fluid cannot be said to have sufficient power in this respect. Accordingly, a more advantageous process has been desired not only from this point of view, but also from the viewpoint of energy efficiency.

US-4,705,673 describes a non-aqueous process for removal of acidic gases, such as carbon dioxide, from a hydrocarbon gas stream using a non-aqueous solution of an amine as absorbent. EP-0 224 348 also describes a process for removing acidic gases, such as carbon dioxide, with low carbon-dioxide partial pressures not greater than 0.3 bar.

### OBJECT AND SUMMARY OF THE INVENTION

In view of the above-described problem, the present inventors made an intensive investigation for the purpose of developing a process for the removal of carbon dioxide present in gases by use of an absorbing fluid containing an absorbent having higher CO₂-absorbin power and CO₂-releasing power and being more advantageous from the viewpoint of energy efficiency, as compared with the conventionally used absorbing fluid comprising an aqueous solution of MDEA.

As a result, the present inventors have found that the above-described problem can be solved, for example, by bringing a carbon dioxide-containing gas into contact with an aqueous solution containing a specific amine compound as an absorbent. The present invention has been completed from this point of view.

Accordingly, the present invention provides a process for the removal of carbon dioxide present in a carbon dioxide-containing gas, comprising the steps of:
bringing a carbon dioxide-containing gas into contact with an aqueous solution of a tertiary amine as an absorbent, wherein the aqueous solution contains at least N-ethyldiethanolamine (EDEA) at a concentration in the range of 30 to 50 % by weight, and wherein the carbon dioxide-containing gas has a partial pressure of CO₂ in the range of 0.3 to 50 atm (absolute pressure),
regenerating the aqueous solution after bringing the carbon dioxide-containing gas into contact therewith by releasing carbon dioxide from the aqueous solution, wherein the regenerating step comprises flashing of carbon dioxide from the absorbent aqueous solution at atmospheric pressure ±0.5 atm, and/or steam stripping of carbon dioxide from the absorbent solution, and
recirculating the regenerated aqueous solution to the step for bringing into contact with a carbon dioxide-containing gas.

Moreover, the present invention also provides a process for the removal of carbon dioxide present in gases wherein the aqueous absorbent solution further contains at least one other amine compound having carbon dioxide-absorbing power, the amount of the other amine compound being 1.5 to 50 % by weight in the aqueous solution.

As to the aqueous solution (or absorbing fluid) containing the aforesaid absorbent and used for contact with a carbon dioxide-containing gas, the concentration of the aforesaid absorbent is usually in the range of 30 to 50% by weight. Moreover, when brought into contact with the gas, the absorbing fluid usually has a temperature in the range of 30 to 70°C and preferably 35 to 60° C.

If necessary, the aforesaid absorbing fluid used in the present invention may contain a corrosion inhibitor, a deterioration inhibitor and the like.

Moreover, in order to further enhance the CO₂-absorbing power of the aforesaid absorbing fluid (e.g., the absorbed CO₂ level and the absorption rate), one or more other amine compounds having CO₂-absorbing power may be used in admixture with the amine compound N-ethyldiethanolamine (EDEA).

Preferred examples of such other amine compounds include monoethanolamine, 2-methylaminoethanol, 2-ethylaminoethanol, 2-n-propylaminoethanol, 2-isopropylaminoethanol, 2-nbutylaminoethanol, piperazine, 2-methylpiperazine, 2,5dimethylpiperazine and 2-piperidineethanol. When such other amine compounds are used, the concentration of them alone is usually in the range of 1.5 to 50% by weight and preferably 5 to 40% by weight, provided that they are soluble in water together with the amine compound N-ethyldiethanolamine (EDEA).

The object gas to be treated in the present invention is one having a CO₂ partial pressure in the range of 0.3 to 50 atm. (absolute pressure), and specific examples thereof include various industrial gases produced or dealt with in chemical plants, such as natural gas and synthesis gases.

Furthermore, the present invention also provides an apparatus (a system) suitable for carrying out the above-described processes of the present invention.

According to the processes of the present invention, carbon dioxide present in a gas having a CO₂ partial pressure in the range of about 0.3 to 50 atm. (absolute pressure) can be absorbed and recovered with higher energy efficiency, as compared with conventional processes using MDEA.

### BRIEF DESCRIPTION OF THE DRAWINGS

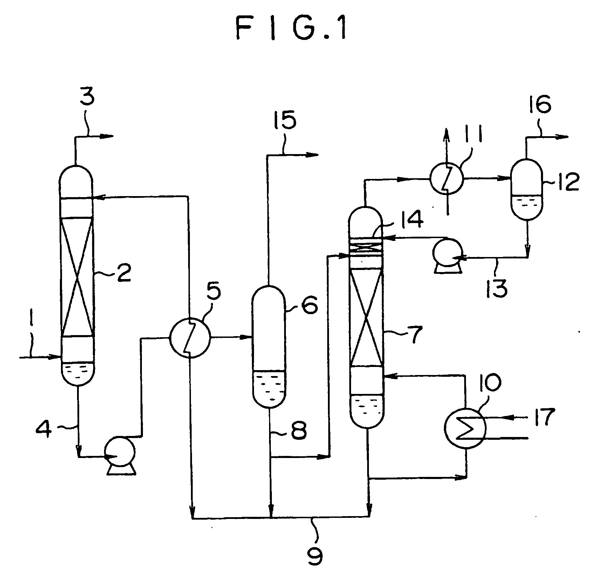

FIG.1 is a flow diagram of an exemplary system for carrying out the process for the removal of carbon dioxide from gases in accordance with the present invention.

### DETAILED DESCRIPTION OF PREFERRED EMBODIMENTS

Although no particular limitation is placed an the system which can be employed to carry out the process of the present invention, one specific example thereof is described below with reference to FIG. 1. In this figure, only essential elements are shown.

In FIG.1, reference numeral 1 designates an object gas to be treated; 2, an absorption tower; 3, treated gas; 4, a CO₂₋rich absorbing fluid; 5, a heat exchanger which is installed as required; 6, a flash drum; 7; a regeneration tower; 8, a first regenerated CO₂-lean absorbing fluid; 9, a second regenerated CO₂-lean absorbing fluid; 10, a reboiler; 11 an overhead condenser; 12, a separating drum; 13, a recirculation fluid; 14, a nozzle; and 15 and 16, released CO₂.

A gas 1 having a CO₂ partial pressure in the range of 0.3 to 50 atm. (i.e., an object gas to be treated) is fed to the lower part of an absorption tower 2. This absorption tower 2 is packed, for example, with a wetted-wall type packing material so that the ascending gas will come into efficient gas-liquid contact with a CO₂-lean absorbing fluid fed to the upper part thereof. The treated gas 3 having been freed of carbon dioxide by contact with the CO₂-lean absorbing fluid is discharged from the top of absorption tower 2.

On the other hand, the CO₂-lean absorbing fluid having absorbed CO₂ turns into a CO₂-rich absorbing fluid 4, which is withdrawn from the bottom of absorption tower by means of a pump, transferred to a regeneration step, and regenerated therein.

The regeneration step consists essentially of a flash drum 6 and a regeneration tower 7. In operation, the use of flash drum 6 alone, the use of both flash drum 6 and regeneration tower 7, or the use of regeneration tower 7 alone is suitably chosen according to the type of the absorbent and the treating conditions.

For example, when flash drum 6 alone is used, CO₂-rich absorbing fluid 4 having a pressure higher than atmospheric pressure is introduced into flash drum 6 which is preset at atmospheric pressure or in the vicinity thereof (e.g., atmospheric pressure t 0.5 atm). Thus, CO₂-rich absorbing fluid 4 is flashed to release some CO₂. The released CO₂ 15 is discharged from the top of flash drum 6.

The absorbing fluid having a reduced CO₂ content as a result of the release of some CO₂ (i.e., a first regenerated CO₂₋lean absorbing fluid 8) is directly recycled to absorption tower 2 and reused therein.

Alternatively, when both flash drum 6 and regeneration tower 7 are used according to the type of the absorbent, the treating conditions, and the like, part of the aforesaid first regenerated CO₂-lean absorbing fluid 8 is introduced into a regeneration tower 7.

The lower part of regeneration tower 7 is-equipped with a reboiler 10 using a steam source 17, so that CO₂ is released from first regenerated CO₂-lean absorbing fluid 8 by steam stripping. The released CO₂, together with steam, is discharged from the top of regeneration tower 7, cooled with an overhead condenser 11, and then introduced into a separating drum 12 where it is separated into the released CO₂ 16 and the condensate. The released CO₂ 16 is discharged out of the system, while the condensate is recirculated to a nozzle 14 of regeneration tower 7 as a recirculation fluid 13.

The regenerated absorbing fluid (i.e., a second regenerated CO₂-lean absorbing fluid 9) is withdrawn from the bottom of regeneration tower 7 and recycled for use in the absorption step together with first regenerated CO₂-lean absorbing fluid B. In the case of the absorbing fluid from which only a small amount of CO₂ is released in flash drum 6, the CO₂-rich absorbing fluid may be directly regenerated in regeneration tower 7, instead of being passed through flash drum 6 (the line used for this purpose is omitted in FIG. 1).

The present invention makes it possible to remove carbon dioxide from gases by use of an absorbing fluid having higher CO₂-absorbing power and being more advantageous from the viewpoint of energy efficiency, as compared with the conventionally used absorbing fluid comprising an aqueous solution of MDEA.

That is, according to the process of the present invention, carbon dioxide present in a gas having a CO₂ partial pressure in the range of about 0.3 to 50 atm. (absolute pressure) can be absorbed and recovered with higher energy efficiency, as compared with conventional processes using an absorbent comprising MDEA or the like. Thus, the present invention provides a CO₂ absorption process which is very valuable from the viewpoint of energy saving and hence has a very important significance from an industrial point of view.

The present invention (in particular, the absorbing fluid used therein) is more specifically explained with reference to the following examples. However, these examples are not to be construed to limit the scope of the invention.

### Example 1

An aqueous solution containing 3 moles/liter (or 40% by weight) of N-ethyldiethanolamine (EDEA) as an absorbent was used as an absorbing fluid. In a stainless steel reactor of double-tube structure, the inner tube (with a capacity of 2 liters) was charged with 500 milliliters of the absorbing fluid, and its temperature was kept constant by passing a temperature-controlled heating medium (silicone oil) through the outer tube.

The absorbing fluid was circulated through the reactor by raising the absorbing fluid from the lower part to the upper part of the reactor through an absorbing fluid circulation line having a pump installed therein, and allowing it to flow downward. On the other hand, CO₂ gas was fed from a cylinder to the lower part of the reactor. At the same time, the unabsorbed CO₂ was discharged from the reactor through a CO₂ discharge line having an automatic regulating valve installed therein so as to maintain a constant CO₂ partial pressure within the reactor. Thus, the CO₂ partial pressure was kept constant.

After starting the feed of CO₂ gas, samples of the absorbing fluid were taken at regular intervals of time and their CO₂ contents were measured with a CO₂ analyzer (or total organic carbon meter) to calculate the saturated CO₂ level (in moles of CO₂ per mole of amine).

The above-described procedure was carried out under the conditions (X) of the absorption region (including a CO₂ partial pressure of 10 atm. and a temperature of 40°C) and the conditions (Y) of the regeneration region (or steam stripping) (including a CO₂ partial pressure of 0.1 atm. and a temperature of 120°C), and the corresponding saturated CO₂ levels (in moles of CO₂ per mole of amine) were calculated. Moreover, the released CO₂ level (A-B) was calculated from the difference between the saturated CO₂ level (A) under the conditions (X) of the absorption region and the saturated CO₂ level (B) under the conditions (Y) of the regeneration region.

The results thus obtained are shown in Table 1.

### Comparative Example 1

An experiment was carried out in the same manner as in Example 1, except that an aqueous solution containing 3 moles/liter (or 36% by weight) of N-methyldiethanolamine (MDEA) as an absorbent was used as an absorbing fluid, in place of the aqueous solution containing 3 moles/liter (or 40% by weight) of N-ethyldiethanolamine (EDEA) as an absorbent. Then, the saturated CO₂ levels (in moles of CO₂ per mole of amine) under aforesaid conditions (X) and (Y) and the released CO₂ level were calculated in the same manner as in Example1.

The results thus obtained are shown in Table 1.

**Table 1**

| | Absorbent level | Saturated CO₂ level (A) under conditions (X) (moles of CO₂/ mole of amine) | Saturated CO₂ level (B) under conditions (Y) (moles of CO₂/ mole of amine) | Released CO₂ level (A-B) (moles of CO2/ mole of amine) |
|---|---|---|---|---|
| Example 1 | EDEA | 0.951 | 0.029 | 0.922 |
| Comparative Example 1 | MDEA | 0.884 | 0.030 | 0.854 |

It is evident from the results shown in the above Table 1 that, when an aqueous solution of N-ethyldiethanolamine (EDEA) that is an amine compound in accordance with the present invention is used as an absorbing fluid for CO₂ gas (Example 1), the saturated CO₂ level per mole of the absorbent in the absorption region (conditions (X)) is increased as compared with the case in which an aqueous solution of MDEA is used (Comparative Example 1). Consequently, it can be seen that the released CO₂ level becomes higher than in the case in which an aqueous solution of MDEA is used, thus making it possible to remove CO₂ more efficiently.

## Claims

1. Process for the removal of carbon dioxide present in a carbon dioxide-containing gas, comprising the steps of:
bringing a carbon dioxide-containing gas into contact with an aqueous solution of a tertiary amine as an absorbent, wherein the aqueous solution contains at least N-ethyldlethanolamine (EDEA) at a concentration in the range of 30 to 50 % by weight, and wherein the carbon dioxide-containing gas has a partial pressure of CO₂ in the range of 0.3 to 50 atm (absolute pressure),
regenerating the aqueous solution after bringing the carbon dioxide-containing gas into contact therewith by releasing carbon dioxide from the aqueous solution, wherein the regenerating step comprises flashing of carbon dioxide from the absorbent aqueous solution at atmospheric pressure ±0.5 atm, and/or steam stripping of carbon dioxide from the absorbent solution, and
recirculating the regenerated aqueous solution to the step for bringing into contact with a carbon dioxide-containing gas.

2. Process for the removal of carbon dioxide present in a carbon dioxide-containing gas as claimed in claim 1 wherein the aqueous absorbent solution further contains at least one other amine compound having carbon dioxide-absorbing power, the amount of the other amine compound being 1.5 to 50 % by weight in the aqueous solution.

3. Process for the removal of carbon dioxide present in a carbon dioxide-containing gas as claimed in claim 1 or 2 wherein, when brought into contact with said gas, said aqueous solution containing the absorbent has a temperature in the range of 30 to 70°C, preferably 35 to 60°C.

## Patentansprüche

1. Verfahren zur Entfernung von Kohlendioxid, das in einem kohlendioxidhaltigen Gas enthalten ist, mit den Schritten des:
Bringens eines kohlendioxidhaltigen Gases in Kontakt mit einer wässrigen Lösung eines tertiären Amins als Absorptionsmittel, wobei die wässrige Lösung zumindest N-Ethyldiethanolamin (EDEA) in einer Konzentration im Bereich von 30 bis 50 Gew.-% enthält und wobei das kohlendioxidhaltige Gas einen CO₂-Partialdruck im Bereich von 0,3 bis 50 atm (Absolutdruck) hat,
Regenerierens der wässrigen Lösung nach dem Inkontaktbringen des kohlendioxidhaltigen Gases mit ihr durch Freisetzen von Kohlendioxid aus der wässrigen Lösung, wobei der Regenerierschritt ein Entspannungsverdampfen von Kohlendioxid aus der wässrigen Absorptionsmittellösung bei Atmosphärendruck ±0,5 atm und/oder ein Dampfstrippen von Kohlendioxid aus der Absorptionsmittellösung umfasst, und des
Rezirkulierens der regenerierten wässrigen Lösung zu dem Schritt zum Inkontaktbringen mit einem kohlendioxidhaltigen Gas.

2. Verfahren zur Entfernung von Kohlendioxid, das in einem kohlendioxidhaltigen Gas enthalten ist, nach Anspruch 1, bei dem die wässrige Absorptionsmittellösung ferner wenigstens eine weitere Aminverbindung mit Kohlendioxidabsorptionsfähigkeit enthält, wobei die Menge der weiteren Aminverbindung in der wässrigen Lösung 1,5 bis 50 Gew.-% beträgt.

3. Verfahren zur Entfernung von Kohlendioxid, das in einem kohlendioxidhaltigen Gas enthalten ist, nach Anspruch 1 oder 2, bei dem die das Absorptionsmittel enthaltende wässrige Lösung eine Temperatur im Bereich von 30 bis 70°C, vorzugsweise 35 bis 60°C, aufweist, wenn sie in Kontakt mit dem Gas gebracht wird.

## Revendications

1. Procédé d'extraction du dioxyde de carbone présent dans un gaz contenant du dioxyde de carbone, comprenant les étapes de :
mise en contact d'un gaz contenant du dioxyde de carbone avec une solution aqueuse d'une amine tertiaire comme absorbant, la solution aqueuse contenant au moins de la N-éthyldiéthanolamine (EDEA) à une concentration dans la fourchette de 30 à 50 % en poids, et le gaz contenant du dioxyde de carbone possédant une pression partielle de CO₂ dans la fourchette de 0,3 à 50 atm (pression absolue),
régénération de la solution aqueuse après mise en contact du gaz contenant du dioxyde de carbone avec celle-ci par libération du dioxyde de carbone de la solution aqueuse, l'étape de régénération comprenant l'évaporation éclair du dioxyde de carbone de la solution aqueuse absorbante à la pression atmosphérique ± 0,5 atm, et/ou l'extraction à la vapeur du dioxyde de carbone de la solution absorbante, et
recirculation de la solution aqueuse régénérée vers l'étape de mise en contact avec un gaz contenant du dioxyde de carbone.

2. Procédé d'extraction du dioxyde de carbone présent dans un gaz contenant du dioxyde de carbone selon la revendication 1 dans lequel la solution absorbante aqueuse contient en outre au moins un autre composé aminé possédant une capacité d'absorption de dioxyde de carbone, la quantité de l'autre composé aminé étant de 1,5 à 50 % en poids dans la solution aqueuse.

3. Procédé d'extraction du dioxyde de carbone présent dans un gaz contenant du dioxyde de carbone selon la revendication 1 ou 2 dans lequel, lorsqu'elle est mise en contact avec ledit gaz, ladite solution aqueuse contenant l'absorbant est à une température dans la fourchette de 30 à 70°C, de préférence 35 à 60°C.
